Europäisches Patentamt

European Patent Office

Office européen des brevets

(19)

(11) Numéro de publication: **0 263 733**
**B1**

(12) **FASCICULE DE BREVET EUROPEEN**

(45) Date de publication du fascicule du brevet:
27.12.89

(21) Numéro de dépôt: 87402054.8

(22) Date de dépôt: 15.09.87

(51) Int. Cl.⁴: **F16L 55/10**, G21C 13/06,
F28F 11/02

(54) **Dispositif de bouchage étanche d'un orifice traversant une paroi.**

(30) Priorité: 06.10.86 FR 8613872

(43) Date de publication de la demande:
13.04.88 Bulletin 88/15

(45) Mention de la délivrance du brevet:
27.12.89 Bulletin 89/52

(84) Etats contractants désignés:
BE DE ES SE

(56) Documents cités:
DE-A- 2 808 341
FR-A- 2 137 905
GB-A- 1 247 383

(73) Titulaire: FRAMATOME, Tour Fiat 1, Place de la Coupole,
F-92400 Courbevoie(FR)

(72) Inventeur: Billoue, Jean-Paul, 34, rue de la Garenne,
F-78130 Chappet(FR)

(74) Mandataire: Polus, Camille et al, c/o Cabinet
Lavoix 2, Place d'Estienne d'Orves, F-75441 Paris
Cedex 09(FR)

## Description

L'invention concerne un dispositif de bouchage étanche d'un orifice traversant une paroi séparant deux fluides.

Les générateurs de vapeur des réacteurs nucléaires à eau sous pression comportent généralement une plaque tubulaire de grande épaisseur qui est traversée par des alésages dans lesquels sont fixés par sertissage les tubes du faisceau du générateur. La plaque tubulaire est en contact d'un côté avec l'eau sous pression constituant le fluide primaire et de l'autre côté avec l'eau d'alimentation dont on assure l'échauffement et la vaporisation et qui constitue le fluide secondaire.

Lorsqu'un tube du faisceau du générateur de vapeur est détérioré, il est souvent nécessaire de l'extraire de la plaque tubulaire et d'assurer le bouchage étanche du trou traversant le plaque tubulaire dont on a extrait le tube. En effet, il est nécessaire de maintenir une séparation complète entre le fluide primaire et le fluide secondaire.

On a proposé différentes techniques de bouchage des trous d'une plaque tubulaire de générateur de vapeur libérés par les tubes du faisceau dont on a effectué l'extraction.

Une des techniques utilisées consiste à poser un bouchon directement dans l'alésage de la plaque tubulaire (voir FR-A 2 137 905). Cependant, un tel bouchon n'assure pas le revêtement du trou de la plaque tubulaire sur toute sa longueur, si bien que la plaque tubulaire en acier faiblement allié est exposée à la corrosion par le fluide secondaire, à l'intérieur du trou, dans sa zone non revêtue. De plus, des produits corrosifs risquent de s'accumuler dans le trou, au dessus du bouchon.

Pour éviter ces inconvénients, on a donc préconisé la pose d'un doigt de gant assurant le recouvrement de toute la surface du trou traversant la plaque tubulaire. Un tel doigt de gant est constitué par un tube d'une longueur au moins égale à l'épaisseur de la plaque tubulaire fermé à l'une de ses extrémités par un fond soudé. Le doigt de gant est serti par dudgeonnage dans la plaque tubulaire, sur toute sa longueur, le fond étanche assemblé par soudure étant disposé du côté secondaire. Pour éviter d'avoir à inspecter périodiquement la soudure d'assemblage du fond, on réduit les sollicitations auxquelles cette soudure est soumise, en mettant cette soudure et le fond en équipression, en prévoyant un trou de communication dans la paroi latérale du doigt de gant. Il est donc nécessaire d'assurer l'étanchéité du doigt de gant par un bouchon qu'on vient placer à l'entrée du trou de la plaque tubulaire et du doigt de gant, du côté primaire.

Cette technique qui donne un résultat satisfaisant, sur le plan de la résistance à la corrosion de la plaque tubulaire, présente cependant l'inconvénient d'être d'une mise en oeuvre délicate et de nécessiter un temps d'intervention relativement long des opérateurs, à l'intérieur de la partie primaire du générateur de vapeur. Il en résulte une exposition aux radiations des opérateurs d'une durée relativement longue.

Le but de l'invention est donc de proposer un dispositif de bouchage étanche d'un orifice traversant une paroi séparant deux fluides, constitué par un manchon tubulaire fermé à l'une de ses extrémités par un bouchon de forme tubulaire obturé par un fond, qui permette de protéger de manière efficace l'orifice de la paroi contre l'action de l'un des fluides, qui présente une très bonne résistance mécanique et une étanchéité très sûre, les fonctions de résistance mécanique et d'étanchéité étant indépendantes et qui soit facile à mettre en place dans une opération rapide, éventuellement en milieu irradié.

Dans ce but, l'alésage interne du manchon comporte successivement, dans la direction axiale, une première partie dont le diamètre est inférieur au diamètre extérieur du bouchon et une seconde partie recevant le brouchon dont le diamètre correspond sensiblement à celui du bouchon, un épaulement annulaire séparant les deux parties de l'alésage,
- le manchon comporte un orifice traversant sa paroi latérale et débouchant dans la seconde partie de l'alésage,

- le bouchon comporte également un orifice traversant sa paroi latérale, placé de façon que cet orifice soit situé, lorsque le bouchon est mis en place dans le manchon et maintenu en position par rétreint du manchon, plus près de l'extrémité fermée que l'orifice du manchon,
- et trois soudures d'etanchéité et de fixation continues, de forme annulaire reliant la surface extérieure du bouchon et la surface intérieure du manchon sur toute leur périphérie et disposées, pour deux d'entre elles, de part et d'autre de l'ensemble des deux orifices du bouchon et du manchon et, pour la troisième, entre les deux orifices, sont effectuées préalablement à la pose du dispositif de bouchage dans l'orifice de la paroi.

Afin de bien faire comprendre l'invention, on va maintenant décrire, à titre d'exemple non limitatif, en se référant aux figures jointes en annexe, un mode de réalisation d'un dispositif de bouchage suivant l'invention utilisé pour obturer un trou traversant la plaque tubulaire d'un générateur de vapeur d'un réacteur nucléaire à eau sous pression.

La figure 1 est une vue en coupe axiale d'un manchon d'un dispositif de bouchage suivant l'invention.

La figure 2 est une vue en coupe axiale d'un bouchon de fermeture correspondant.

La figure 3 est une vue en coupe axiale du manchon et du bouchon après leur fixation mutuelle et avant leur mise en place dans une plaque de générateur de vapeur.

La figure 4 est une vue en coupe axiale d'un dispositif de bouchage suivant l'invention, après sa mise en place dans la plaque tubulaire d'un générateur de vapeur.

La figure 5 est une vue agrandie du détail A de la figure 3 ou de la figure 4.

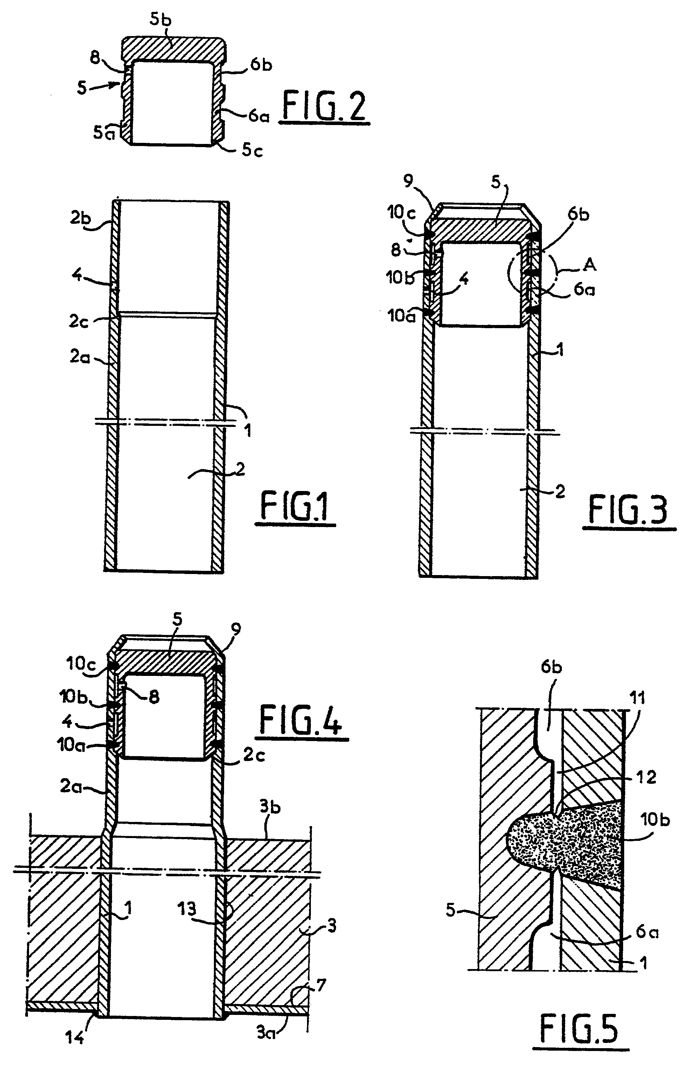

Sur la figure 1, on voit le manchon 1 d'un dispositif de bouchage suivant l'invention. Le manchon tubulaire 1 a un diamètre extérieur égal à celui d'un tube du faisceau du générateur de vapeur et une longueur un peu supérieure à l'épaisseur de la plaque tubulaire du générateur de vapeur. L'alésage intérieur 2 de ce manchon comporte deux zones successives 2a et 2b, la zone 2b de plus grand diamètre étant obtenue par réusinage du manchon dans sa zone d'extrémité et étant séparée de la zone 2a à plus faible diamètre par un épaulement tronconique 2c.

La paroi latérale du manchon 1 est traversée par un orifice 4 débouchant dans l'alésage 2, dans sa partie élargie 2b.

Le bouchon 5 représenté sur la figure 2 comporte un corps tubulaire 5a et un fond de fermeture 5b. Le bouchon 5 peut être obtenu avantageusement, sous forme d'une seule pièce, par usinage d'une ébauche cylindrique. Le diamètre extérieur maximal de la partie tubulaire 5a et le diamètre extérieur du fond 5b correspondent sensiblement au diamètre de la partie élargie 2b de l'alésage 2 du manchon. La partie tubulaire 5a est terminée, à l'opposé du fond 5b, par un rebord tronconique 5c de même angle au sommet que l'épaulement tronconique 2c du manchon.

Le corps tubulaire 5a est usiné, sur sa surface extérieure, suivant deux gorges 6a et 6b dont la profondeur correspond à une fraction de l'épaisseur de la paroi tubulaire 5a. Cette paroi tubulaire est traversée par une ouverture 8, au niveau de la gorge 6b, située le plus près du fond 5b.

L'assemblage du dispositif de bouchage est réalisé par introduction du bouchon 5 dans la partie 2b de l'alésage du manchon, le bouchon venant alors reposer par son rebord tronconique 5c sur l'épaulement tronconique 2c.

La longueur du bouchon 5 étant un peu inférieure à la longueur de la partie 2b de l'alésage, la partie d'extrémité du manchon 1 dépasse le fond 5b. On réalise un rétreint 9 (visible sur la figure 3) sur cette partie du manchon saillante par rapport au bouchon. Le bouchon 5 est ainsi maintenu par blocage mécanique à l'intérieur du manchon 1.

La position de l'orifice 4 du manchon, dans la zone de l'alésage 2b voisine de l'épaulement 2c, et la position de l'orifice 8 du bouchon, au voisinage du fond 5b, sont telles que l'orifice 8 du bouchon est situé plus près du fond de fermeture 5b que l'orifice 4 du manchon 1, lorsque le bouchon est mis en place dans le manchon, comme représenté sur la figure 3.

La fixation et l'étanchéification du bouchon dans le manchon sont complétées par trois soudures annulaires 10a, 10b et 10c joignant la surface intérieure du manchon à la surface extérieure du bouchon. Les soudures sont réalisées depuis l'extérieur du manchon dans lequel est disposé le bouchon, par exemple grâce à un dispositif de soudage orbital.

Sur la figure 5, on voit la soudure centrale 10b permettant de joindre le manchon 1 et le bouchon 5, à travers le jeu de montage 11 entre ces deux pièces.

Les soudures 10a et 10c sont disposées de part et d'autre de l'ensemble des deux orifices respectifs 4 et 8 du manchon et du bouchon et la soudure médiane 10b est disposée entre ces deux orifices.

La position de l'orifice 4 du manchon est telle que cet orifice, lorsque le bouchon est en place, débouche dans la gorge 6a. Les soudures 10a et 10c sont donc également disposées de part et d'autre de l'ensemble des deux gorges 6a et 6b et la soudure 10b entre ces deux gorges 6a et 6b.

Sur la figure 4, on voit le dispositif de bouchage après sa mise en place dans une plaque tubulaire 3 de grande épaisseur d'un générateur de vapeur. La face inférieure 3a de cette plaque tubulaire venant en contact avec le fluide primaire est recouverte par un revêtement anti-corrosif 7. La face supérieure 3b de la plaque tubulaire est destinée à venir en contact avec le fluide secondaire constitué par l'eau d'alimentation du générateur de vapeur.

La partie de la plaque tubulaire représentée sur la figure 4 est traversée sur toute son épaisseur par un trou 13 destiné à recevoir un tube du générateur de vapeur. Lors d'une opération d'entretien du réacteur nucléaire, ce tube devenu défectueux a été extrait du trou 13 de la plaque tubulaire 3. On a effectué le bouchage du trou 13 en utilisant le dispositif de bouchage suivant l'invention représenté sur la figure 3. Pour cela, le dispositif est introduit dans le trou 13, depuis la face 3a, c'est-à-dire depuis le côté primaire du générateur de vapeur. Le diamètre du manchon 1 du dispositif, identique au diamètre d'un tube du faisceau du générateur de vapeur, est très légèrement inférieur au diamètre du trou 13. On réalise une expansion diamètrale du manchon en position dans la plaque tubulaire 3, pour assurer sa fixation dans le trou 13. La partie d'extrémité fermée du dispositif de bouchage comportant le bouchon 5 est saillante, par rapport à la face 3b de la plaque tubulaire, dans la partie secondaire du générateur de vapeur.

La fixation du manchon 1 dans le trou 13 est complétée par une opération de dudgeonnage de toute la partie du manchon située dans l'épaisseur de la plaque tubulaire 3. Enfin, une soudure de résistance et d'étanchéité 14 complète la fixation définitive du dispositif de bouchage constituant un doigt de gant.

La fermeture étanche du trou 13 est donc réalisée par une simple opération d'expansion et de dudgeonnage complétée par un soudage. Cette opération classique est relativement rapide et permet d'éviter d'exposer des opérateurs aux radiations, pendant une longue durée.

D'autre part, la résistance mécanique du doigt de gant, c'est-à-dire essentiellement de la liaison entre la bouchon et le manchon, est assurée de diverses manières, ce qui augmente la fiabilité du dispositif. En effet, d'une part le bouchon est maintenu à l'intérieur du manchon par l'épaulement 2c et par le rétreint 9 et d'autre part, il est fixé par les trois lignes de soudures annulaires 10a, 10b, 10c. Ces moyens de fixation du bouchon sont totalement indépendants, si bien qu'en cas de défaillance d'un de ces moyens, par exemple en cas de défaillance des soudures, les autres moyens continuent à assurer la retenue du bouchon.

D'autre part, la fonction d'étanchéité qui est assurée par les anneaux de soudure du bouchon est indépendante de la fonction de retenue mécanique assurée par l'épaulement 2c et le rétreint 9.

Toute perte d'étanchéité du bouchon peut être facilement détectée par contrôle d'activité du fluide secondaire. En effet, dans le cas où l'une quelconque des soudures 10a, 10b et 10c perd son étanchéité, du fluide primaire sous pression et radioactif chemine dans le dispositif de bouchage pour se répandre dans la partie secondaire du générateur de vapeur. Dans le cas où la soudure 10a perd son étanchéité, le fluide primaire peut passer dans la partie secondaire du générateur de vapeur par l'intermédiaire de la gorge 6a et de l'orifice 4. Dans le cas où la soudure 10b est défectueuse, du fluide primaire peut passer dans la partie secondaire, par l'intermédiaire de l'orifice 8, de la gorge 6b, de la gorge 6a et enfin de l'orifice 4. Enfin, si la soudure 10c est défectueuse, du fluide primaire peut passer dans la partie secondaire par l'intermédiaire de l'orifice 8 et de la gorge 6b.

Il est bien évident que les gorges 6a et 6b ne sont pas absolument indispensables si un jeu suffisant est ménagé entre les surfaces latérales du manchon et du bouchon, en dehors de leur zone de jonction par soudure.

Dans tous les cas de fissuration ou de rupture d'une soudure, on détecte donc très rapidement cette défaillance de la soudure sans que la fixation du bouchon assurée de façon mécanique par les autres soudures soit mise en cause. On peut ainsi intervenir très rapidement sur le dispositif de bouchage et bien avant que sa défaillance atteigne un degré important.

On peut encore améliorer la progressivité de la perte des fonctions d'étanchéité et de résistance mécanique du dispositif en ajustant les sections résistantes des diverses soudures 10a, 10b, 10c à des valeurs différentes, de façon à diminuer la probabilité de voir la fonction étanchéité de ces trois soudures disparaître simultanément. Une telle section résistante ajustée 12 de la soudure 10b est visible sur la figure 5. Elle peut être obtenue en utilisant des paramètres de soudage différents pourchacune des trois soudures.

Le dispositif de bouchage étanche suivant l'invention est donc facile à mettre en oeuvre, d'une grande fiabilité et ses fonctions d'étanchéité et de résistance mécanique sont indépendantes. De plus, sa tenue en service est facile à contrôler et toute perte d'étanchéité est détectée bien avant que le bouchon ne risque de se détacher et de devenir un corps migrant dans le réacteur nucléaire.

Il est donc possible, lorsqu'une fuite faible est détectée, d'attendre la mise à l'arrêt programmée du réacteur nucléaire pour intervenir sur le dispositif de bouchage à l'origine de cette fuite.

On évite également le recours à des procédures complexes de contrôle des dispositifs de bouchage, lors des arrêts programmés du réacteur.

La forme du dispositif en doigt de gant s aillant à l'intérieur de la partie secondaire du générateur de vapeur permet également d'éviter tout phénomène d'ébullition locale, de concentration de substances corrosives au contact du dispositif de bouchage et dans la plaque tubulaire, et donc des risques de corrosion rapide de ce dispositif et de la plaque tubulaire.

Le doigt de gant peut être mis en place et fixé grâce à un dispositif de déplacement et de commande d'outils utilisé dans les opérations d'inspection et de maintenance du faisceau tubulaire d'un générateur de vapeur.

Enfin, en cas de défaillance d'un doigt de gant, il peut être extrait avec les moyens classiques d'extraction et remplacé.

L'invention ne se limite pas au mode de réalisation qui a été décrit.

C'est ainsi qu'on peut imaginer des manchons et bouchons de forme un peu différente de celles qui ont été décrites adaptée à la forme et à la dimension de la plaque tubulaire ou autre paroi et des alésages de cette plaque tubulaire dans lequeles on vient fixer le dispositif de bouchage.

Enfin, le dispositif de bouchage suivant l'invention peut être utilisé pour obturer des orifices traversant une paroi différente de la plaque tubulaire d'un générateur de vapeur de réacteur nucléaire.

## Revendications

1.- Dispositif de bouchage étanche d'un orifice traversant une paroi séparant deux fluides, constitué par un manchon tubulaire fermé à l'une de ses extrémités par un bouchon de forme tubulaire obturé par un fond, caractérisé par le fait que l'alésage interne (2) du manchon (1) comporte successivement, dans la direction axiale, une première partie (2a) dont le diamètre est inférieur au diamètre extérieur du bouchon et une seconde partie (2b) recevant le bouchon dont le diamètre correspond sensiblement à celui du bouchon (5), un épaulement annulaire (2c) séparant les deux parties de l'alésage (2a, 2b),

- que le manchon (1) comporte un orifice (4) traversant sa paroi latérale et débouchant dans la seconde partie (2b) de l'alésage (2),
- que le bouchon (5) comporte également un orifice (8) traversant sa paroi latérale (5a) placé de façon que cet orifice (8) soit situé, lorsque le bouchon (5) est mis en place dans le manchon (1) et maintenu en place par un rétreint (9) du manchon (1), plus près de l'extrémité fermee (5b) que l'orifice (4) du manchon (1) et que trois soudures d'étancheité et de fixation continues (10a, 10b, 10c), de forme annulaire, reliant la surface extérieure du bouchon (5) et la surface intérieure du manchon (1) sur toute leur périphérie et disposées, pour deux d'entre elles, de part et d'autre de l'ensemble des deux orifices (4, 8) du bouchon (5) et du manchon (1) et, pour la troisième (10b), entre les deux orifices (4, 8), sont effectuées préalablement à la pose du dispositif de bouchage, dans l'orifice (13) de la paroi (3).

2.- Dispositif de bouchage suivant la revendication 1, caractérisé par le fait que le bouchon (5) comporte deux gorges (6a, 6b) dans sa paroi latérale externe, que l'orifice (8) du bouchon traverse la paroi latérale (5a) de ce bouchon au niveau de la gorge (6b) située le plus près du fond (5b) du bouchon (5) et que, lorsque le bouchon (5) est en place dans le manchon (1), l'orifice (4) du manchon (1) débouche dans la gorge (6a) la plus éloignée du fond (5b) du bouchon (5).

3.- Dispositif de bouchage suivant l'une quelconque des revendications 1 et 2, caractérisé par le fait que l'épaulement (2c) entre les deux parties successives de l'alésage (2) du manchon (1) est de forme tronconique et que l'extrémité (5c) du bouchon (5) opposée à son fond (5b) présente une forme tronconique correspondante.

4.- Dispositif de bouchage suivant l'une quelconque des revendications 1, 2 et 3, caractérisé par le fait que les sections résistantes des soudures (10a, 10b, 10c) sont ajustées à des valeurs différentes, pour diminuer la probabilité de défaillance simultanée des trois soudures (10a, 10b, 10c ).

5.- Dispositif de bouchage suivant l'une quelconque des revendications 1 à 4, dans le cas où la paroi est constituée par la plaque tubulaire (3) d'une générateur de vapeur d'une réacteur nucléaire à eau sous pression et l'orifice (13), par un orifice de passage d'un tube du faisceau, caractérisé par le fait que le manchon (1) présente un diamètre extérieur identique au diamètre d'un tube du faisceau du générateur de vapeur.

**Patentansprüche**

1. Vorrichtung zum dichten Verschließen einer durch eine Flüssigkeiten trennende Wand führenden Öffnung, mit einer röhrenförmigen Muffe, die an einem ihrer Enden mittels eines röhrenförmigen und von einem Boden verschlossenen Stopfens verschlossen wird, dadurch gekennzeichnet, daß die Innenbohrung (2) der Muffe (1) nacheinander in axialer Richtung einen ersten Bereich (2a), dessen Durchmesser kleiner ist als der Außendurchmesser des Stopfens und einen den Stopfen aufnehmenden zweiten Bereich (2b), dessen Durchmesser genau demjenigen des Stopfens (5) entspricht, aufweist, wobei ein ringförmiger Bund (2c) die zwei Bohrungsbereiche (2a, 2b) trennt,
- die Muffe (1) eine Öffnung (4) aufweist, die durch deren Seitenwand führt und in den zweiten Bereich (2b) der Bohrung (2) mündet,
- der Stopfen (5) ebenfalls eine Öffnung (8) aufweist, die durch dessen Seitenwand (5a) führt und so angeordnet ist, daß sie dann, wenn der Stopfen (5) in die Muffe (1) eingebracht und dort mittels der Verengung (9) der Muffe (1) gehalten wird, näher am geschlossenen Ende (5b) sich befindet als die Öffnung (4) der Muffe (1), und
- vor dem Einbringen der Verschlußvorrichtung in die Öffnung (13) der Wand (3) drei ringförmige, ununterbrochene Dichtungs- und Befestigungsschweißnähte (10a, 10b, 10c) angebracht werden, die die Außenfläche des Stopfens (5) und die Innenfläche der Muffe (1) entlang ihres gesamten Umfangs verbinden, und von denen zwei beiderseits der Anordnung der zwei Öffnungen (4, 8) des Stopfens (5) und der Muffe (1) und die dritte (10b) zwischen den beiden Öffnungen (4, 8) angeordnet sind.

2. Verschlußvorrichtung gemäß Anspruch 1, dadurch gekennzeichnet, daß der Stopfen (5) in seiner äußeren Seitenwand zwei Auskehlungen (6a, 6b) aufweist, die Öffnung (8) des Stopfens auf Höhe der näher am Boden (5b) des Stopfens (5) angeordneten Auskehlung (6b) durch die Seitenwand (5a) dieses Stopfens hindurchführt und die Öffnung (4) der Muffe (1) dann in die vom Boden (5b) des Stopfens (5) weiter entfernte Auskehlung (6a) mündet, wenn der Stopfen (5) sich in der Muffe (1) befindet.

3. Verschlußvorrichtung gemäß einem der Ansprüche 1 und 2, dadurch gekennzeichnet, daß der Bund (2c) zwischen den beiden aufeinanderfolgenden Bereichen der Bohrung (2) der Muffe (1) eine kegelstumpfartige Form aufweist und das dem Boden (5b) gegenüberliegende Ende (5c) des Stopfens (5) eine entsprechende kegelstumpfartige Form besitzt.

4. Verschlußvorrichtung gemäß einem der Ansprüche 1, 2 und 3 dadurch gekennzeichnet, daß die Werte der widerständigen Abschnitte der Schweißnähte (10a, 10b, 10c) unterschiedlich eingestellt sind, damit die Wahrscheinlichkeit des gleichzeitigen Ausfalls der drei Schweißnähte (10a, 10b, 10c) verringert wird.

5. Verschlußvorrichtung gemäß einem der Ansprüche 1 bis 4 für den Fall, in dem die Wand von einer röhrenförmigen Platte (3) des Dampfgenerators eines Druckwasser-Kernreaktors und die Öffnung (13) von der Durchlaßöffnung einer Strahlröhre gebildet wird, dadurch gekennzeichnet, daß die Muffe (1) einen Außendurchmesser aufweist, der mit dem Durchmesser der Strahlröhre des Dampfgenerators identisch ist.

**Claims**

1. A device for the fluidtight of an aperture extending through a wall separating two fluids, the device comprising a tubular sleeve closed at one end by a tubular stopper closed by an end member, characterized in that the inside bore (2) of the sleeve (1) comprises in succession axially a first portion (2a) whose diameter is smaller than the external diameter of the stopper and a second portion (2b) receiving the stopper and having a diameter corresponding sustantially to that of the stopper (5), an annular shoulder (2c) separating the two parts (2a, 2b) of the bore; the sleeve (1) comprises an aperture (4) extending through its side wall and leading into the second portion (2b) of the bore (2); the stopper (5) also comprises an aperture (8) which extends through its side wall (5a) and is so disposed that when the stopper (5) is placed in position in the sleeve (1) and held in position by a swaging (9) of the sleeve (1), the aperture (8) is situated nearer the closed end (5b) than the aperture (4) in the sleeve (1); and three continuous sealing and fastening welds (10a, 10b, 10c) of annular shape, connecting the outer surface of the stopper (5) and the inner surface of the sleeve (1) over their entire periphery and disposed, in the case of two of them, one on each side of the set of two apertures (4, 8) of the plug (5) and in the sleeve (1) and, in the case of the third one (10b) between the two apertures (4, 8), are made prior to the placing of the closure device in the aperture (13) in the wall (3).

2. A closure device according to claim 1, characterized in that the stopper (5) is formed with two grooves (6a, 6b) in its outer side wall: the aperture (8) in the stopper extends through the side wall (5a) of the stopper at the groove (6b) situated closer to the end (5b) of the stopper (5); and when the stopper (5) is in position in the sleeve (1), the aperture (4) in the sleeve (1) leads into the groove (6a) furthest away from the end (5b) of the stopper (5).

3. A closure device according to claims 1 or 2, characterized in that the shoulder (2c) between the two successive portions of the bore (2) of the sleeve (1) is of frustoconical shape, and the end (5c) of the stopper (5) opposite its end (5b) has a corresponding frustoconical shape.

4. A closure device according to any of claims 1, 2 and 3, characterized in that the resistant sections of the welds (10a, 10b, 10c) are adjusted to different values, to reduce the probability of the simultaneous failure of the three welds (10a, 10b, 10c).

5. A closure device according to any of claims 1 to 4, in cases in which the wall is formed by the tube plate (3) of a steam generator of a pressurized water nuclear reactor and the aperture (13) is formed by a hole for the passage of a tube of the cluster, characterized in that the sleeve (1) has an external diameter identical to the diameter of a tube of the steam generator cluster.

FIG.2

FIG.1

FIG.3

FIG.4

FIG.5